# EUROPEAN PATENT SPECIFICATION

(11) **EP 3 184 408 B1**
(45) Date of publication and mention of the grant of the patent: **31.10.2018**
(21) Application number: 16205418.3
(22) Date of filing: 20.12.2016
(51) Int. Cl.: B62J 9/02, B62J 37/00, B62J 9/00

(54) **MOTORCYCLE**
MOTORRAD
MOTOCYCLETTE

(30) Priority: 22.12.2015 JP 2015250410; 24.08.2016 JP 2016163888
(43) Date of publication of application: 28.06.2017
(73) Proprietor: KAWASAKI JUKOGYO KABUSHIKI KAISHA, Hyogo 650-8670 (JP)
(72) Inventor: UCHIDA, Takashi, Hyogo, 673-8666 (JP); KUNISADA, Youhei, Hyogo, 673-8666 (JP)
(74) Representative: Porta, Checcacci & Associati S.p.A

(56) References cited:
- WO-A1-2013/094631
- WO-A1-2014/158103
- JP-A- H10 324 281
- US-A1- 2007 089 922
- US-A1- 2014 339 804

## Description

### BACKGROUND OF THE INVENTION

### (Field of the Invention)

The present invention relates to a motorcycle having a canister mounted on a rear portion of the motorcycle body.

### (Description of Related Art)

Since vapor discharged from a fuel tank constitutes a cause for atmospheric air pollution, the amount of the vapor discharged is currently regulated. Accordingly, in motorcycles, a canister which is a vessel accommodating an adsorbent body such as activated carbon is provided. In this respect, see, for example, JP Laid-open Patent Publication No. 2011-162060 and JP Laid-open Patent Publication No. 2011-162061. In those motorcycles, after the vapor of the fuel has been adsorbed by the adsorbent body, the vaper is fed to an intake passage of the engine and is then burned in the engine.

In JP Laid-open Patent Publications No. 2011-162060 and No. 2011-162061, the canister is disposed in a rear portion of the motorcycle. Accessories such as a battery and general tools, which are frequently removed, are accommodated in the rear portion of the motorcycle. When some of those accessories are removed, the canister and/or a tube that is connected with the canister may be interfered with the accessories. For this reason, the need is realized to protect the canister and/or tube or the like, and this tends to lead to increase the number of component parts and the cost of manufacture.

In JP H10 324281, which shows the features of the preamble of claim 1, the canister is placed in a space between the right end part of a cross pipe and the upper plate part of a rear fender, on the right side of an oil tank, in which a rear cover is provided such that it covers around of a helmet storing box.

### SUMMARY OF THE INVENTION

In view of the foregoing, it is an object of the present invention to provide a motorcycle in which the occurrence of interference with the canister, which would occur during the removal or mounting of the accessories, can be easily avoided.

In order to accomplish the foregoing object, there is provided, in accordance with the present invention, a motorcycle as defined in claim 1. It is to be noted that the term "motorcycle body" referred to above and hereinafter should be understood as meaning components other than a combustion engine, a power transmitting device and an electric component and, specifically, a component forming a frame, a component forming a cowling or fairing, a component forming a seat, a component forming a steering, a component forming a suspension, a component forming a tire/wheel and/or a component forming a brake. Similarly, the term "accessory" hereinabove and hereinafter referred to should be understood as meaning such a component or components that are mounted on the motorcycle body and, specifically, a battery, a motorcycle mounted tool, a U-shaped lock for locking motorcycle wheel or wheels, and/or a motorcycle mounted instrument such as, for example, an electronic toll collecting system.

A region rearwardly of a front end of the rear wheel in the motorcycle body has a vertical direction dimension which is chosen to be small so as to avoid the interference with the fluctuating rear wheel and, therefore, such a region tends to become a small region. On the other hand, a removable accessory tends to be located on a portion of the motorcycle body above the rear wheel, that is, a motorcycle body rear portion, and the accessary is removable, for example, by selectively opening or closing a seat. For this reason, if a canister is arranged in the motorcycle body rear portion, at the time when the accessory is to be removed, the accessory and/or a tool used to accomplish such removal may contact the canister. However, according to the foregoing construction, since the canister space and the accommodating space for the accessory are separated from each other by the partition wall, at the time of removal or mounting of the accessory, the canister can be protected from the contact with the accessory and/or the tool.

In another preferred embodiment of the present invention, the partition wall may be so formed as to block the canister space from the accommodating space. It is to be noted that the wording "(to) block the canister space from the accommodating space" means a condition in which the canister space and the accommodating space are completely divided by the partition wall and direct communication between those spaces is inhibited. According to this structural feature, with the canister space blocked from the accommodating space, even when a component and/or a tool is fallen down during the removal or mounting work being taken place, there is no possibility that such component and/or tool will not move to the canister space. Accordingly, the canister can be protected, and also the work can be performed with no regard to the possible interference with the canister, and, therefore, the removal or mounting work can be eased. Also, with the canister space tightly closed relative to the accommodating space, a liquid medium such as, for example, rain water will not hardly leak from the accommodating space to the canister space.

In a further preferred embodiment of the present invention, the accessory referred to above may include a battery, and the canister may be disposed in the vicinity of a connection terminal member of the battery. The term "in the vicinity of' referred to above and hereinafter has to be understood as meaning that the distance between connecting terminal members of the battery and the canister is smaller than the short dimension of the battery when viewed in a top plan view. According to this structural feature, the battery and the canister are disposed in the neighborhood with each other and the both are separated from each other by the partition wall. By so doing, while a space efficiently is increased when the both having a relatively large capacities are disposed adjacent to each other, the possible contact between the connecting terminal members of the battery, which may require maintenance, and the canister is avoided and the canister is therefore protected.

A portion of a rear fender disposed above the rear wheel forms the partition wall, and a recessed portion configured to be recessed upwardly is provided in an lower surface of the rear fender, in which case the accommodating space is formed on an upper surface side of the rear fender and the recessed portion in the lower surface of the rear fender forms the canister space. According to this structure features, since a portion of the rear fender forms the partition wall, there is no need to separately prepare a member for the partition wall and the number of component parts can be reduced accordingly. Also, if the canister is disposed in the recessed portion provided in a lower surface of the rear fender and the accessory is mounted on an upper surface of the rear fender, the canister space and the accommodating space can be completely separated from each other. Also, if the canister, which is seldom removed, is disposed on a lower side of the canister and the accessory, which is often removed for maintenance is disposed on an upper side, the convenience increases.

Where the recessed portion on the lower surface of the rear fender forms the canister space, the rear fender has a covering fitted thereto to enclose or cover the recessed portion. According to this structural feature, the possibility of a muddy water entering from the rear wheel and/or the road surface into the canister space can be avoided. In such case, the covering may be formed with an opening. According to this structural feature, even when the liquid medium such as, for example, rain water enters into the canister space, the liquid medium can be discharged from the opening. In such case, the covering may have an upper surface that is inclined, and the opening may be formed in the lowest position of an upper surface of the covering. According to this structural feature, the liquid medium will be hardly reserved within the canister space.

Where the opening referred to above is formed, the opening may open forwardly. According to this structural feature, muddy water swirled behind the rear wheel and then splashed therefrom into the opening can be prevented from intruding into the canister space through the opening. In such case, a tube connected with the canister may pass across the opening. According to this structural feature, an opening for drainage and an opening for wiring can be realized by one and the same opening.

In a yet further preferred embodiment of the present invention, the tube connected with the canister may be disposed on an outer side of the accommodating space. According to this structural feature, the accessory accommodated within the accommodating space has a less change of contacting a tube disposed on an outer side of the accommodating space and, therefore, the tube can be suitably protected.

In a first further preferred embodiment of the present invention, the motorcycle may include: a fuel tank disposed between a handlebar and a rider's seat; the accessory disposed below the rider's seat and removably fitted to a motorcycle body; the canister disposed between the fuel tank and the accessory; and an upstream side tube to fluid connect between the canister and the fuel tank. A tank side connection point, to which one end of the upstream side tube is connected, is formed in a rear surface of the fuel tank, and the canister is formed with a canister side connection point to which the other end of the upstream tube is connected. The canister and the accessory are partitioned from each other by the partition wall. The accessor includes, for example, a battery.

In JP Laid-open Patent Publication No. 2011-162060 referred to previously, the canister accommodating the adsorbent body is disposed within the accommodating space in the motorcycle. In this accommodating space in the motorcycle, accessories such as tools and battery, that are highly frequently removed, are accommodated. Where the accessories referred to above are to be removed, there is the possibility that they may interfere with the canister and the tube connected with the canister. For this reason, need is realized to protect the canister, the tube or the like, and therefore, it leads to the increase of the number of component parts for protection purpose and the cost of manufacture.

According to this structural feature, since the canister and the accessory are partitioned from each other by the partition wall, it is possible to avoid the possible interference between the accessory or the tool and the canister. Also, since the canister is disposed rearwardly of the fuel tank and adjacent to the fuel tank rather than to the accessory, the upstream side tube between the canister and the fuel tank can be shortened.

In a further preferred embodiment of the present invention, the motorcycle may further include an accessory casing in which the accessory is accommodated, in which case a front portion of the accessory casing may form at least a part of the partition wall. According to this structural feature, since the accessory casing concurrently forms the partition wall, the number of component parts can be reduced.

Where the accessory casing is employed, such accessory casing may include a canister support portion for supporting the canister referred to above. According to this structural feature, since the accessory casing concurrently serves as a support for the canister, the number of component parts is reduced. Also, by avoiding the deviation in relative position between the accessory casing and the canister, positioning of the canister in the vicinity of the accessory casing can be eased.

Where the accessory casing includes the canister support portion as discussed above, the motorcycle may further include: a downstream side tube to connect between a combustion engine and the canister; and an open/close valve disposed in the downstream side tube to selectively open or close a passage within the downstream side tube, in which case the accessory casing may include an open/close valve support portion for supporting the open/close valve. According to this structural feature, since the accessory casing concurrently serves as a support for the open/close valve, the number of component parts can be reduced. Also as compared with the separate formation of the open/close valve support portion, the positioning of the open/close valve in the vicinity of the canister can be eased by avoiding the deviation in relative position between the canister and the downstream side tube.

In a further preferred embodiment of the present invention, the canister side connection point may be positioned above a lower surface of the accessory. Also, the canister side connection point may be positioned above a lower surface of the fuel tank. According to those structural features, since the canister side connection point is positioned below the seat and as upwardly as possible, it is possible to avoid the increase of the vertical direction dimension of the upstream side tube and upstream side tube can be shortened.

In a further preferred embodiment of the present invention, both of the tank side connection point and the canister side connection point may be positioned on one side in A motorcycle widthwise direction relative to the motorcycle widthwise direction center line of the motorcycle body. According to this structural feature, it is possible to avoid the increase of the length of the upstream tube in the motorcycle widthwise direction, and the upstream side tube can therefore be reduced in length.

Where the tank side connection point is disposed on the one side om the motorcycle widthwise direction relative to the motorcycle widthwise direction center line of the motorcycle body, the canister may be formed to represent a box-like shape having a lengthwise direction oriented in a motorcycle widthwise direction, and the canister side connection point may be formed at one end portion of the canister on the one side in the motorcycle widthwise direction, in which a first distance from the motorcycle widthwise direction center line of the motorcycle body to one end surface of the canister on the one side in the motorcycle widthwise direction may be chosen to be smaller than a second distance from the motorcycle widthwise direction center line of the motorcycle body to the other end surface of the canister on the other side in the motorcycle widthwise direction. According to the above described structural feature, the undesirable increase of the upstream side tube in the motorcycle widthwise direction can be avoided, and the upstream side tube can therefore be reduced in length.

In a further preferred embodiment of the present invention, the motorcycle may further include an accessory casing to accommodate therein the accessory, and the accessory casing may be supported by a step bracket for supporting a foot step of a fellow passenger. According to this structural feature, since the step bracket for the foot step concurrently serves as a support for the accessory casing, the number of component parts is reduced.

Another motorcycle herein provided in accordance with the present invention includes a fuel tank disposed between a handlebar and a rider's seat, an accommodating casing disposed below the rider's seat and accommodating therein a material to be accommodated, a canister disposed between the fuel tank and a front surface of the accommodating casing, and an upstream side tube to fluid connect between the canister and the fuel tank. The fuel tank has a rear surface formed with a tank side connection point to which one end of the upstream side tube is connected, and a canister side connection point is formed in the canister, to which canister side connection point the other end of the upstream side tube is connected. The accommodating casing opens upwardly, and the canister side connecting point is positioned above a lower surface of the accommodating casing.

According to the above described construction, since the canister side connection point is positioned below the rider's seat and above and forwardly of a front surface of the accommodating casing, it is possible to avoid the undesirable increase of the dimension of the upstream side tube, and the upstream side tube can therefore be shortened. Also, since the canister is positioned forwardly of the front surface of the accommodating casing, it is possible to avoid the possible interference of the canister during the mounting of the accommodating casing.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view of a motorcycle designed in accordance with a first preferred embodiment of the present invention;
Fig. 2 is a top plan view showing a rear portion of the motorcycle shown in Fig. 1;
Fig. 3 is a longitudinal sectional view showing the rear portion of the motorcycle shown in Fig. 1;
Fig. 4 is a bottom plan view showing a condition in which a covering has been removed from the rear portion of the motorcycle shown in Fig. 1;
Fig. 5 is a bottom plan view showing another condition in which the covering is fitted to the rear portion of the motorcycle shown in Fig. 1;
Fig. 6 is a transverse sectional view of a rear fender used in the motorcycle shown in Fig. 1;
Fig. 7 is a side view of the motorcycle designed in accordance with a second preferred embodiment of the present invention;
Fig. 8 is a top plan view of the motorcycle shown in Fig. 7;
Fig. 9 is a top pan view showing an important portion of the motorcycle shown in Fig. 7;
Fig. 10 is a side view showing an important portion of the motorcycle shown in Fig. 7;
Fig. 11 is a perspective view showing a battery casing in the motorcycle shown in Fig. 7, as viewed from above in a direction diagonally rearwardly;
Fig. 12 is a perspective view showing the battery casing, as viewed from above in a direction diagonally forwardly;
Fig. 13 is a perspective view showing a condition in which a canister in the motorcycle shown in Fig. 7 is mounted;
Fig. 14 is a side view showing the canister and a holder;
Fig. 15 is a bottom plan view showing an important portion of the motorcycle shown in Fig. 7; and
Fig. 16 is a sectional view showing a support portion for the battery casing.

### DESCRIPTION OF PREFERRED EMBODIMENTS

Hereinafter preferred embodiments of the present invention will be described. It is, however, to be noted that in describing the preferred embodiments of the present invention that follows, the terms "left" and "right", or similar notations, that are hereinabove and hereinafter used are to be understood as meaning relative terms descriptive of positions and/or directions as viewed from a motorcycle rider occupying the motorcycle seat.

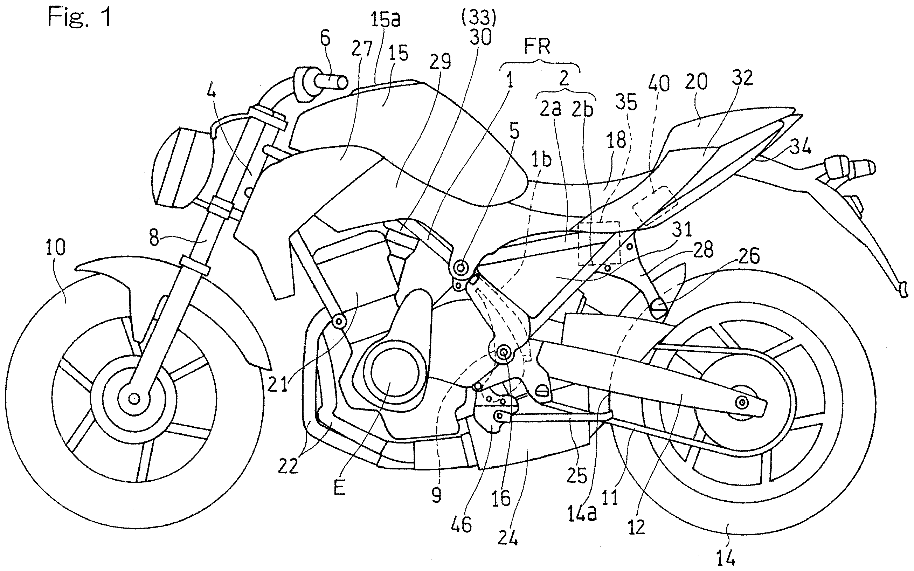

Fig. 1 illustrates, in a side view, a motorcycle designed in accordance with a first preferred embodiment of the present invention. The motorcycle frame structure FR of the illustrated motorcycle includes a main frame 1, forming a front half of the frame structure FR, and a rear frame 2 forming a rear half of the frame structure FR. The main frame 1 extends diagonally rearwardly and downwardly from an upper portion of a head pipe 4 defined at a front end thereof, and the rear frame 2 is connected at a rear portion of the main frame 1.

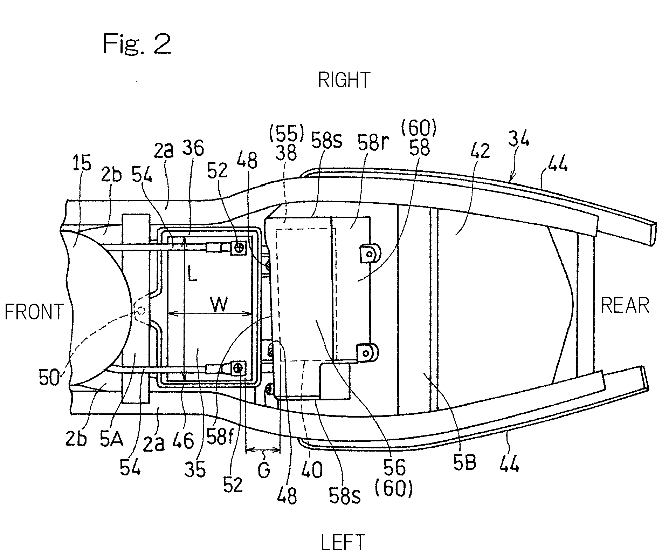

The rear frame 2 includes a seat rail 2a, extending rearwardly from an upper portion of the rear portion of the main frame 1, and a reinforcement rail 2b extending diagonally upwardly and rearwardly from a lower portion of the rear portion of the main frame 1 so as to be connected with the seat rail 2a. As shown in Fig. 2, the seat rail 2a and the reinforcement rail 2b are provided each on left and right sides. The left and right seat rails 2a and 2a are connected together by means of first and second cross members 5A and 5B which extend in a direction widthwise of the motorcycle or a motorcycle widthwise direction. The front side first cross member 5A is provided below a rear end of a fuel tank 15 and below the neighborhood of a front end a rider's seat 18 (shown in Fig. 1) whereas the rear side second cross member 5B is provided below the neighborhood of a front end of a fellow passenger's seat 20 (shown in Fig. 1).

As shown in Fig. 1, a front fork 8 is rotatably supported by the head pipe 4 through a steering shaft (not shown). The front fork 8 has an upper end portion to which a steering handlebars 6 is fixed, and a front wheel 10 is fitted to a lower portion of the front fork 8.

The main frame 1 has a rear end portion provided with a swingarm bracket 9. A swingarm 12 is supported by a pivot pin 16, which is fitted to the swingarm bracket 9, for movement up and down. A rear wheel 14 is rotatably supported by a rear end portion of the swing arm 12.

A motorcycle combustion engine E is disposed below the main frame 1 and forwardly of the swing arm 9 and is fitted to the main frame 1. The combustion engine E drives the rear wheel 14 by means of a power transmitting member 11 such as, for example, a drive chain. A cylinder unit 21 including an engine cylinder and a cylinder head of the combustion engine E has a rear portion to which a throttle body 30 is fitted, and an air intake passage 33 for supplying an intake air towards the combustion engine E is formed in the throttle body 30. On the other hand, an exhaust pipe 22 is fluid connected with a front surface of the cylinder unit 21. The exhaust pipe 22 is, after having extended in a direction forwardly and downwardly of the combustion engine E, fluid connected with an exhaust muffler 24 that is disposed rearwardly and beneath the combustion engine E.

A fuel tank 15 is disposed on an upper portion of the main frame 1. The fuel tank 15 has a top surface provided with a fuel filling port 15a. The rider's seat 18 and the fellow passenger's seat 20 are supported by the seat rail 2a forming a part of the rear frame 2. On the left side which is one lateral side of the motorcycle body, a side stand 25 for supporting the motorcycle body in an inclined fashion at the time of parking is disposed and is supported by the swingarm bracket 9. During the parking, the motorcycle is supported in a leftwardly tilted fashion by the side stand 25. Also, on both sides of the motorcycle body, respective steps 26 for the support of fellow passenger's feet are disposed and are supported by the reinforcement rail 2b of the rear frame 2 through a step stay 28.

Regions forwardly of the combustion engine E and below a front portion of the fuel tank 15 are covered from the outside by left and right paired shrouds 27. Also, regions rearwardly of the shrouds 27 regions below an intermediate and rear portions of the fuel tank 15 and regions below the rider's seat 18 are covered from the outside by left and right paired kneed grip coverings 29. Regions below the rider's seat 18 and bound by the main frame 1, the seat rail 2a and the reinforcement rail 2b are covered from the lateral outside by left and right paired side coverings 31.

Regions rearwardly of the knee grip coverings 29 and regions below the rear portion of the rider's seat 18 and below the fellow passenger's seat 20 are covered from lateral outside by left and right paired rear coverings 32. A fear fender 34 is disposed below the rear coverings 32 and above the rear wheel 14.

The rear fender 34 is formed with an accommodating space 36, in which a battery 35 or a sort of accessories is accommodated, and a canister space 38 in which a canister 40 is disposed. The term "accessory" referred to hereinbefore and hereinafter is to be understood as a component that is mounted of the motorcycle body and should therefore understood as including, besides the battery 35 referred to above, motorcycle mounted tools, a U-shaped lock for locking the motorcycle wheel, a motorcycle mounted electronic toll collecting system and others.

The accommodating space 36 and the canister space 38 are provided in the rear fender 34 at a location rearwardly of a front end 14a of the rear wheel 14, with the accommodating space 36 positioned forwardly of the canister space 38. The rear fender 34 is a molded article made of a resinous material and, as shown in Fig. 2, includes a bottom wall 42 and opposite side walls 44. The bottom wall 42 is upwardly inclined in a rearward direction. This rear fender 34 is fitted to the rear frame 2 by means of a plurality of fastening members (not shown) such as, for example, bolts.

The rear fender 34 has a front end portion to which a battery casing 46 is fitted by means of fitting members 48 such as, for example, bolts and the battery 35 is accommodated within this battery casing 46. In other words, the interior of the battery casing 46 forms the accommodating space 36 for accommodating therein the battery 35 which is a kind of accessory.

The battery casing 46 is of a box like shape opening upwardly and is disposed between the left and right seat rails 2a and 2a. This battery casing 46 has a front portion supported by the first cross member 5A by means of a fitting member 50 such as, for example, a bolt and also has a rear portion supported by the front end portion of the rear fender 34 by means of the fitting members 48 referred to above. Accordingly, the accommodating space 36 referred to above is formed on an upper surface side of the rear fender 34.

The battery 35 is of a substantially rectangular parallelopiped shape when viewed from top and is accommodated within the accommodating space 36 in the battery casing 46 which is complemental to the shape of the battery 35. Electric connecting terminal members 52 are disposed on an upper surface of a rear portion of the battery 35 so as to line up in the motorcycle widthwise direction, and battery cables 54 are connected with those terminal members 52. The battery cables 54 extend forwardly from the connecting terminal members 52, so as to be connected with a power generator (not shown), built in the combustion engine shown in Fig. 1, and an electric component (not shown).

The battery 35 referred to above is disposed below the rider's seat 18. Accordingly, when the rider's seat 18 is removed, access can be made from the outside to the battery 35. Accordingly, a wiring work to connect the battery cables 54 with the terminal members 52, as shown in Fig. 2, and removal or mounting of the battery 35 from and into the battery casing 46 can be accomplished.

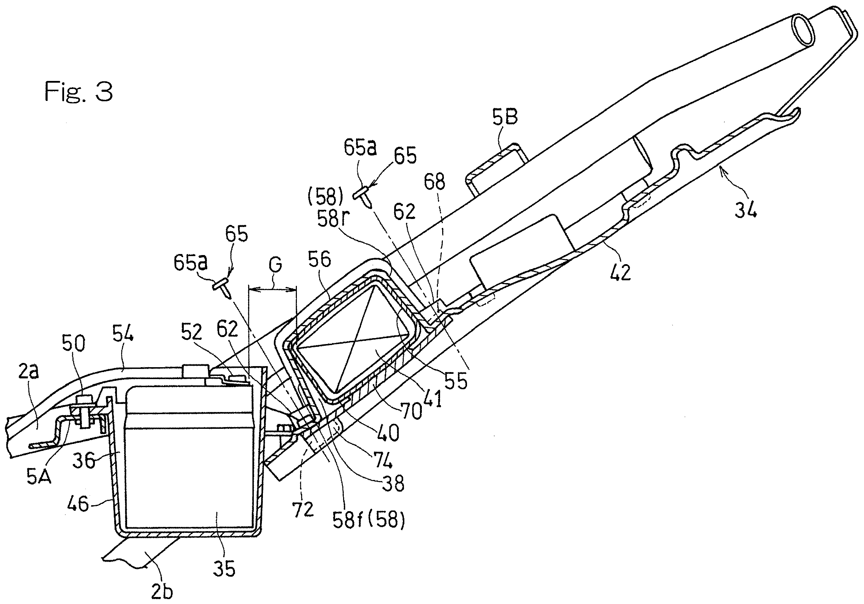

The canister space 38 for accommodating the canister 40 is formed at a location rearwardly of the accommodating space 36 and, specifically, in the front end portion of the rear fender 34. Accordingly, the canister 40 referred to above is disposed rearwardly of the battery 35. As shown in Fig. 3, a portion of the bottom wall 42 of the rear fender 34 protrudes upwardly to define a recessed area 55 configured to be recessed upwardly. In this recessed portion 55 the canister 40 is accommodated. In other words, a space defined by the recessed portion 55 forms the canister space 38. The canister space 38 is formed forwardly of the second cross member 5B and is positioned between the left and right seat rails 2a and 2a. This recessed portion 55 is defined by an upper wall 56 and a peripheral wall 58, and is opened downwardly.

In the practice of the preferred embodiment now under discussion, the recessed portion 55 is of a box like configuration and the peripheral wall 58 thereof includes a front wall 58f, a rear wall 58r and left and right opposite side walls 58s and 58s. This recessed portion 55 is formed in the rear fender 34 integrally by means of any known die forming technique. In other words, the recessed portion 55 forming the canister space 38 is opened in a direction parallel to the direction, in which molding dies used to form the rear fender 34 are withdrawn. The peripheral wall 58 extends in a direction, in which the molding dies are withdrawn, and the upper wall 56 extends in a direction perpendicular to the direction of withdrawal of the molding dies.

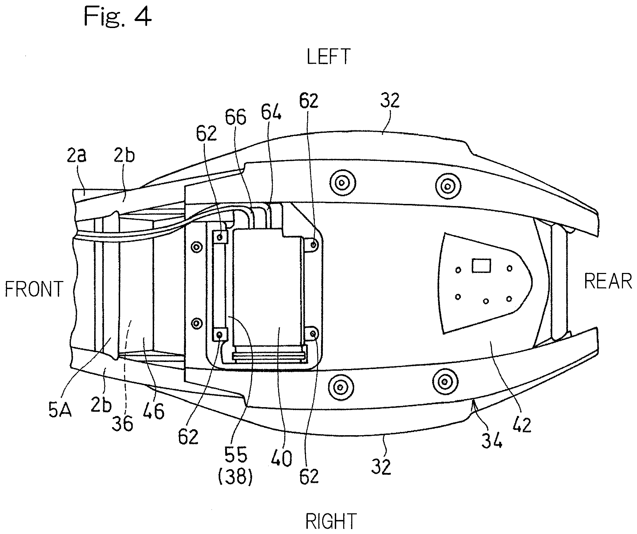

As shown in Fig. 4, at respective portions of the bottom wall 42 of the rear fender 34, which are forwardly and rearwardly of the canister space 38, first insertion holes 62 are formed so as to be substantially oriented in a vertical direction. In the practice of the embodiment now under discussion, the first insertion holes 62 are used two on a front side of the canister space 38 and two on a rear side of the canister space 38, thus, totaling four, while the two insertion holes 62 on each of the front and rear sides of the canister space 38 are disposed in the motorcycle widthwise direction.

As shown in Fig. 3, the battery 35 is disposed on the upper surface side of the rear fender 34 while the canister 40 is disposed on a lower surface side of the rear fender 34. The accommodating space 36 and the canister space 38, which accommodate the battery 35 and the canister 40, respectively, are separated from each other by the upper wall 56 and the peripheral wall 58. In other words, the upper wall 56 and the peripheral wall 58, which form respective parts of the rear fender 34, cooperate together to form a partition wall 60 partitioning between the accommodating space 36 and the canister space 38. In the practice of the embodiment now under discussion, the partition wall 60 is so formed as to partition or block the canister space 38 from the accommodating space 36. In other words, the canister space 38 and the accommodating space 36 are completely partitioned from each other by the partitioning wall 60 and, hence, direct communication between those two spaces 36 and 38 are completely blocked. While the accommodating space 36 is communicated with an inner side (upper surface side) space of the rear fender 34, the canister space 38 is communicated with an outer side (lower surface side) space of the rear fender 34, and, therefore, the accommodating space 36 and the canister space 38 are not directly communicate with each other.

The canister 40 shown in Fig. 2 includes a vessel accommodating, within its interior, an adsorbent body 41 such as, for example, activated carbon (as shown in Fig. 3). This canister 40 is of an elongated box-like body or substantially rectangular parallelepiped shape having its lengthwise direction oriented in a direction parallel to the motorcycle widthwise direction when the canister 40 is so installed. The canister 40 is disposed rearwardly of the battery 35 and, specifically, in the vicinity of the connecting terminals 52 of the battery 35. In other words, the distance G between the connecting terminals 52 and the canister 40 is chosen to be smaller than a short dimension of the battery 35, that is, the widthwise dimension W of the battery 35 when viewed from top. The dimension of the canister 40 as measured in a direction parallel to the motorcycle widthwise direction is substantially equal to the lengthwise dimension L of the battery 35 which is a long dimension of the battery 35. As shown in Fig. 3, the canister 40 is so disposed with its upper end portion positioned above the connecting terminals 52 of the battery. 35.

As shown in Fig. 4 of a bottom plan view, an introducing tube 64 for introducing gases within the fuel tank 15 (shown in Fig. 1) into the canister 40, and a deriving tube 66 for fluid connecting the canister 40 with the air intake passage 33 (shown in Fig. 1) of the combustion engine E are connected with a left end portion of the canister 40. Fig. 4 illustrate a condition in which a covering 70 as will be described later is removed. The introducing tube 64 and the deriving tube 66 extend forwardly from the canister 40 and are then fluid connected with the fuel filling port 15a of the fuel tank 15 and the throttle body 30, respectively, both shown in Fig. 1.

The introducing tube 64 and the deriving tube 66 are, in a manner similar to the side stand 25, disposed on a left side of the motorcycle body so as to extend on the left side relative a longitudinal direction center line of the motorcycle body. Accordingly, during the parking the tubes 64 and 66 can be made less visible (or invisible) from the outside to allow the motorcycle to present a fine spectacle. Also, as shown in the bottom plan view in Fig. 4, the introducing tube 64 and the deriving tube 66 are disposed on the outside of the accommodating space 36 and, particularly in the practice of the embodiment now under discussion, below the accommodating space 36. In addition, the introducing tube 64 and the deriving tube 66 extend on an inner side of the step stay 28 of the fellow passenger's step 26 with respect to the motorcycle widthwise direction. Accordingly, the tubes 54 and 66 are made less noticeable.

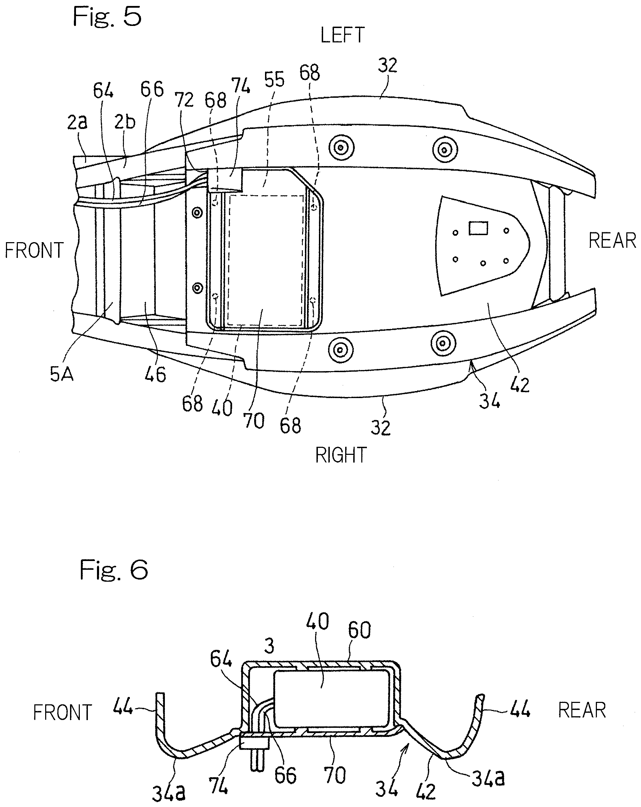

As shown in the bottom plan view in Fig. 5, the covering 70 for enclosing or covering the recessed portion 55 is fitted to a lower surface of the rear fender 34. The covering 70 is in the form of a plate member made of a resinous material and is formed with four first threaded holes 68 which are oriented upwardly and defined at respective positions corresponding to the first insertion holes 62 (shown in Fig. 4). It is, however, to be noted that the material for the covering 70 may not necessarily limited to that referred to above and may be made of a metallic material.

The covering 70 is fitted to the rear fender 34 by means of a screw body 65 that is screwed into each of the threaded holes 68 from an upper surface of the rear fender 34 shown in Fig. 3. More specifically, the screw body 65 is inserted into the first insertion hole 62 in the rear fender 34 from above and is then fastened to the corresponding threaded hole 68 in the covering 70. Accordingly, the covering 70 is fixed to the rear fender 34, and also the canister 40 is retainer within the recessed portion 55 by the covering 70 and the rear fender 34. In this way, the screw body 65 concurrently serves as a fixing member for fixing the covering 70 to the rear fender 34 and a retaining member for the retention of the canister 40. Accordingly, the structure can be simplified, and also the number of component parts is reduced. It is, however, to be noted that a member for retaining the canister 40 within the recessed portion 55 may be separately employed.

Also, in the practice of the embodiment now under discussion, a head portion 65a of the screw body 65 shown in Fig. 3 is disposed on an upper surface side of the rear fender 34. Accordingly, since the head portion 65a of the screw body 65 is not exposed to the outside, the aesthetic feature of the motorcycle can be increased, and also the screw body 65 cannot be manipulated from below in the outside. As a result, an undesirable access to the canister 40 from the outside can be prevented.

Between the covering 70 and the rear fender 34 as shown in Fig. 5, a forwardly opened opening 72 is formed. More specifically, at a front end portion on the left side portion of the covering 70, a depressed portion 74, which is downwardly depressed, is formed, and, by this depressed portion 74, the opening 72 is defined. As shown in Fig. 3, the covering 70 is inclined upwardly and rearwardly along a motorcycle body rear portion, and the opening 72 is formed at the lowest position of the covering 70, that is, in a front end thereof. As shown in Fig. 5, the introducing tube 64 and the deriving tube 66 extend through the opening 72.

As shown in Fig. 6, the covering 70 is positioned above the lowermost surface 34a of the rear fender 34. In other words, the canister 40 does not protrude downwardly relative to the rear fender 34. Accordingly, a space in the vertical direction can be secured between the canister 40 and the rear wheel 14 and, hence, even though the rear wheel 14 is fluctuated up and down during the travelling of the motorcycle, the rear wheel 14 does not contact the canister 40.

With the accessory (battery) 35 moved in a direction, in which removal or mounting is made from or on the motorcycle body, (that is, in the vertical direction), the accessory 35 is configured to be removable relative to the motorcycle body. The canister 40 is partitioned by the partitioning wall 60 relative to a region adjacent to the removal or mounting direction (upwards) of the accessory 35. Also, by the partitioning wall 60 extending between the accessory 35 and the canister 40, the accommodating space 36 and the canister space 38 are partitioned from each other. In the practice of the embodiment now under discussion, since the removal or mounting direction lies in the vertical direction, the canister space 38 is partitioned from a space above the accommodating space 36 which is necessitated for the removal or mounting of the accessory 35, and also the canister space 38 and the accommodating space 36 are partitioned from each other in a front-rear direction or longitudinal direction of the motorcycle.

The canister space 38 is defined by a wall covering the canister 40 from above, forward, rearward and the motorcycle widthwise direction. Accordingly, by this partition wall 60, surfaces other than the lower surface of the canister 40 can be protected. The canister space 38 is opened downwardly while the upper wall 56 opposed to the canister upper surface is formed. An upper end of the accommodating space 36 referred to previously is disposed above a lower end of the canister space 38. Also, the lower surface of the canister 40 is disposed above the lower surface of the battery 35. Accordingly, a region below the canister 40 can be easily utilized.

In the description that follows, a treatment of the vapor fuel performed by the canister 40 will be described. The vapor fuel fed from the fuel tank 15 shown in Fig. 1 is fed to the canister 40 through the introducing tube 64. The vapor fuel fed to the canister 40 is adsorbed by the adsorbent body 41 (shown in Fig. 3), accommodated within the canister 40. Thereafter, the vapor fuel is supplied to the throttle body 30, which forms a part of the air intake passage 33 of the combustion engine E, and is then combusted.

A region rearwardly of the front end 14a of the rear wheel 14 in the motorcycle body has a vertical direction dimension which is, in order to prevent interference with the rear wheel 14 then fluctuating up and down, chosen to be small, and thus, region tends to become a narrow confine. Also, a portion of the motorcycle body above the rear wheel 14, that is, a motorcycle body rear portion is often utilized to accommodate removable accessories by selectively opening and closing the seats 18 and 20. For this reason, if the canister 40 is disposed in the motorcycle body rear portion, it is highly risky that the accessary or tools used during the removal or mounting of the accessory may interfere with the canister 40.

However, in the above described construction, since as shown in Fig. 2 the canister space 38 and the accommodating space 36 for the battery 35 or an accessory are partitioned by the partitioning wall 60, the canister 40 can be protected from the battery 35 and/or the tools during the removal or mounting of the battery 35. Moreover, the canister space 38 (recessed portion 55) and the partition wall 60 are integrally formed in the rear fender 34 by the use of a mold forming technique. Accordingly, the number of component parts can be reduced.

As shown in Fig. 6, the canister 40 is positioned above the lower surface 34a of the rear fender 34. Accordingly, a possible downward protrusion of the canister 40 is avoided to allow the interference of the canister 40 with the rear wheel 14 to be avoided. On the other hand, the upper end of the canister 40 is positioned above the connecting terminal members 52 of the battery 35. For this reason, at the time when the wiring work and/or replacement of the battery 35 is performed, interference is apt to occur between the tool and the canister 40. However, since the partition wall 60 is provided between the canister space 38 and the accommodating space 36 as hereinbefore described, there is no possibility that the battery and/or tool may interfere with the canister 40.

As hereinabove discussed, the battery 35 and the canister 40 are disposed adjacent to each other and are separated from each other by the presence of the partitioning wall 60. Therefore, positioning of the battery 35 and the canister 40, both having a relatively large capacity, adjacent to each other increases the space efficiency and, yet, the canister 40 can be protected by avoiding the possible contact between the terminal members 52 of the battery 35, which possibly requires a maintenance word to be done, and the canister 40.

The partition wall 60 shown in Fig. 2 is so formed as to block the canister space 38 from the accommodating space 36. Accordingly, even though components and/or tools are dropped down into the accommodating space 36 during the removal or mounting of the battery 35, there is no possibility that those components and/or tools may move into the canister space 38. Accordingly, the canister 40 can be protected from the components and/or tools, and also a work can be performed with no attention paid to the interference with the canister 40, and, therefore, the removal or mounting of the battery 35 can be accomplished easily. In addition, with the canister space 38 blocked from the accommodating space 36, it can be made difficult for a liquid medium such as, for example, raindrops to intrude from the accommodating space 36 into the canister space 38.

The accommodating space 36 is formed on the upper surface side of the rear fender 34 shown in Fig. 3 and the canister space 38 is formed on the lower surface of the rear fender 34. Accordingly, since by the upper wall 56 and the peripheral wall 58, both formed integrally with the rear fender 34, the accommodating space 36 and the canister space 38 can be partitioned from each other, there is no use any extra member to define a partition wall and, therefore, the number of component parts used is reduced. Also, when the canister 40 is disposed within the recessed portion 55 that is formed in the lower surface of the rear fender 34 and the battery 35 is mounted on the upper surface of the rear fender 34, the canister space 38 and the accommodating space 36 can be completely partitioned from each other by means of the partition wall 60. Also, when the canister 40, which is seldom removed, is disposed on the lower side and the battery, which is often removed for maintenance purpose, is disposed on the upper side, the convenience increases.

The covering 70 referred to previously for covering the recessed portion 55 is fitted to the rear fender 34. Accordingly, muddy water from the rear wheel 14 and/or the road surface can be prevented from intruding into the canister space 38. Also, since the covering 70 is formed with the opening 72, even when the liquid medium such as, for example, raindrops intrude into the canister space 38, such liquid medium can be drained through the opening 72. Yet, since the opening 72 is formed at a position at the lowermost level of the covering 70, the liquid medium is hardly pooled within the canister space 38.

In addition, since the opening 72 is opened so as to be oriented forwards, muddy water swirled behind the rear wheel 14 and then splashed into the opening 72 can be prevented from intruding into the canister space 38 through the opening 72. Also, the tubes 64 and 66 fluid connected with the canister 40 extend through the opening 72 and, accordingly, an opening for drainage purpose and an opening for the passage of wiring therethrough can be concurrently realized by the opening 72 itself.

The introducing and deriving tubes 64 and 66 shown in Fig. 4 extend below the accommodating space 36. Accordingly, the battery 35 accommodated within the accommodating space 36 has little opportunity to contact the tubes 64 and 66 that are disposed outside the accommodating space 36 and, therefore, the tubes 64 and 66 can be suitably protected.

In the practice of the preferred embodiment of the present invention now under discussion, the battery casing 46, which is a member separate from the rear fender 34, is provided and the battery 35 is accommodated within such battery casing 46. In other words, the interior of the battery casing 46 constitutes the accommodating space 36, but the accommodating space 36 may be disposed on the upper surface of the rear fender 34. In other words, the accommodating space 36 may be formed in the rear fender 34. In such case, if the opening leading to the accommodating space 36 is aligned with the direction of withdrawal of the molding dies, the accommodating space 36 as well can be formed integrally with the rear fender 34 with the use of the a molding die assembly made up of upper and lower split dies.

In the practice of the embodiment now under discussion, the upper wall 56 and the peripheral wall 58, which are respective parts of the rear fender 34, cooperate with each other to form the partition wall 60, but the partition wall may be formed by a member separate from the rear fender 34. Also, the partition wall 60 may be formed so that the canister space 38 will not be blocked from the accommodating space 36. In the practice of the above described embodiment, the canister 40 has been shown and described as positioned rearwardly of and adjacent to the accessory 35, but the canister 40 may be disposed at a location other than rearwardly of the accessory 35, for example, forwardly thereof. Also, the opening 72 of the canister space 38 may be disposed above the connecting terminal members 52 of the battery 35.

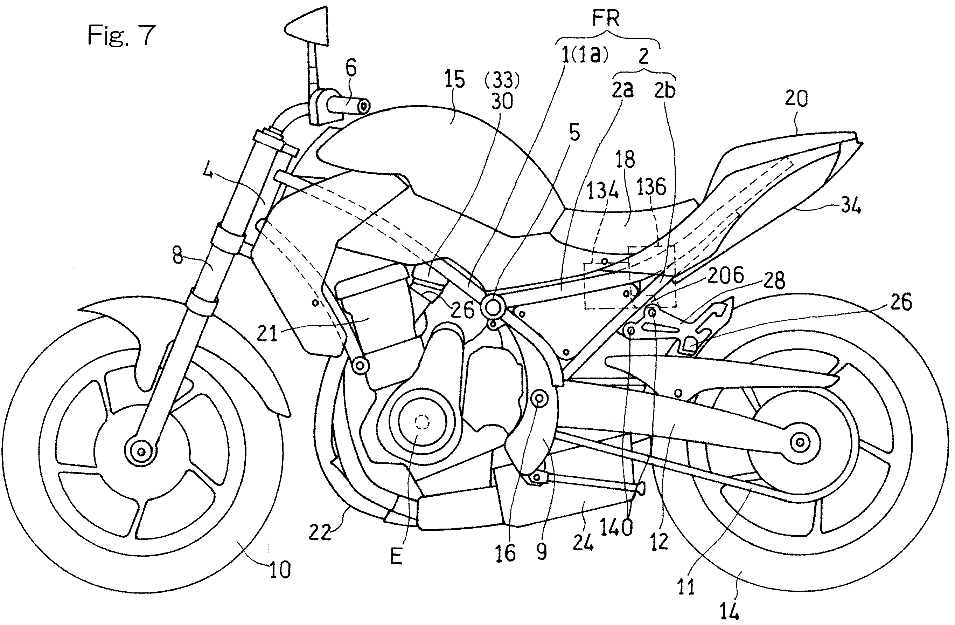

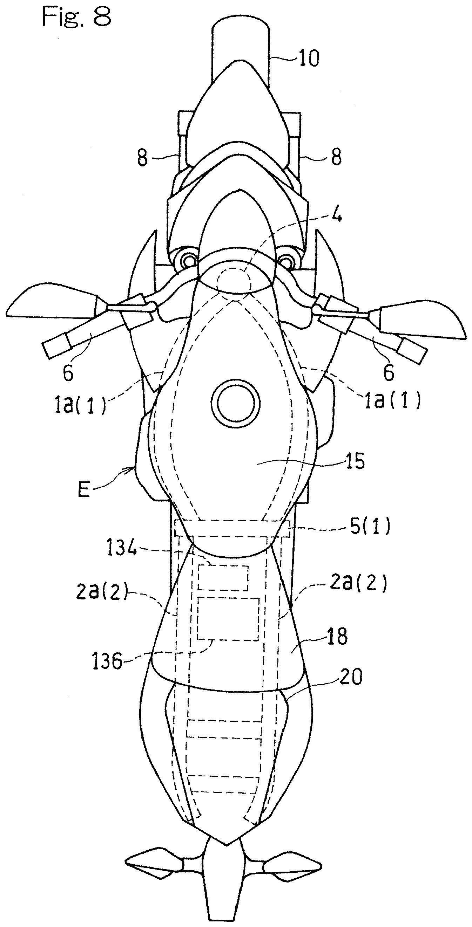

Figs. 7 and 8 illustrates a side view and a top plan view of the motorcycle designed in accordance with a second preferred embodiment of the present invention, respectively. In the practice of this second embodiment of the present invention, component parts similar to those shown and described in connection with the first mentioned embodiment of the present invention are designated by like reference numerals and, therefore, the details thereof are not reiterated for the sake of brevity.

The fuel tank 15 shown in Fig. 7 is disposed above the combustion engine E and rearwardly of the handlebar 6 and forwardly of the rider's seat 18. The upper surface of the fuel tank 15 is positioned above the upper surface of the rider's seat 18. Also, the lower surface of the fuel tank 15 is positioned below the upper surface of the rider's seat 18.

The throttle body 30 is fluid connected with an air intake port 126 defined in the rear portion of the cylinder unit 21. The throttle body 128 has its interior in which the air intake passage 33 is formed for supplying air therethrough to the combustion engine E.

The left and right step brackets 28 for supporting fellow passenger's foot steps 26 are disposed below the rider's seat 18 and on opposite sides of the motorcycle body, respectively. The left and right step brackets 28 are rigidly fitted to the reinforcement rail 2b by means of respective bolts 140. The rear fender 34 is disposed below the rear frame 2 and above the rear wheel 14.

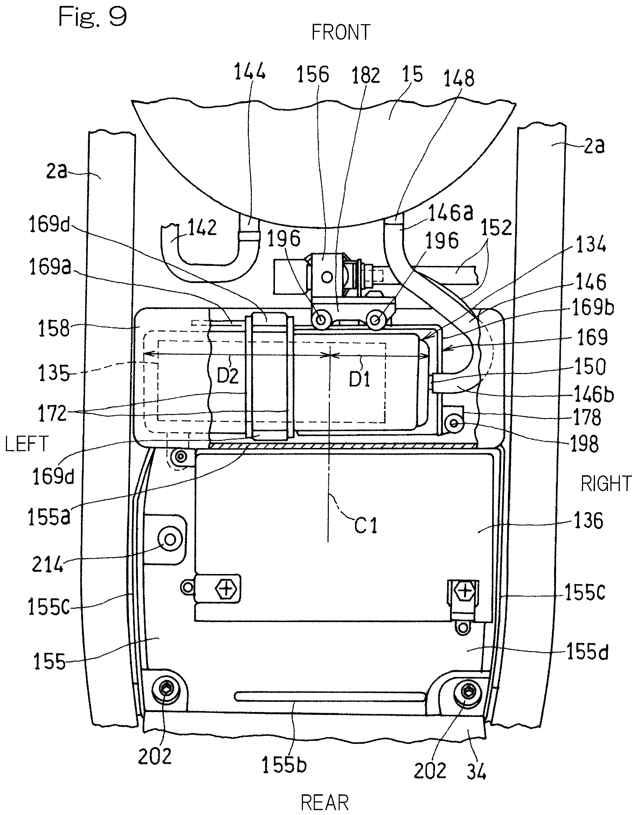

As shown in Fig. 9, the fuel tank 15 has a rear surface in which a drain outlet portion 144, with which a drain tube 142 is fluid connected, and a breather outlet portion 148, with which one end 146a of a breather tube 146 is fluid connected, are provided so as to be lined up side by side in the motorcycle widthwise direction (right-left direction). More specifically, the breather outlet portion 148 is provided on a right side, which is one of the motorcycle widthwise directions, while the drain outlet portion 144 is provided on a left side.

The drain outlet portion 144 and the breather outlet portion 148 protrude rearwardly from the rear surface of the fuel tank 15. The drain outlet portion 144 and the breather outlet portion 148 are positioned spaced a distance from each other in the motorcycle widthwise direction. The breather outlet portion 148 is fluid connected, through a piping in the tank, with a gas space within the fuel tank 15 for reserving the vapor gas. The vapor gas produced by gasoline evaporating within the tank is guided towards the breather outlet portion 148 by means of the piping within the tank.

A canister 134 and a battery 136, which is one of the accessories, are disposed below the rider's seat 18 so as to be lined up in a direction parallel to the longitudinal direction (lengthwise direction) of the motorcycle. The canister 134 is operable to adsorb the vapor of the fuel, emitted from the fuel tank 15, by means of an adsorbent body. The term "accessory" is intended to mean a component that is removably fitted to the motorcycle body and should therefore understood as including, besides the battery 136 referred to above, motorcycle mounted tools, a U-shaped lock for locking the motorcycle wheel, a motorcycle mounted electronic toll collecting system and others. In the practice of the embodiment now under discussion, the battery 136 is removably mounted from above on the motorcycle body.

The canister 134 is disposed rearwardly of the fuel tank 15 and forwardly of the battery 136. This canister 134 is a vessel 134 accommodating therein a mass of activated carbon 135. The canister 134 is of a box-like configuration having its lengthwise direction oriented in a direction parallel to the motorcycle widthwise direction, and is more specifically rectangular. A right end portion of the canister 134, which is one side of the motorcycle widthwise directions, specifically a right end surface of the canister 134 is formed with a canister inlet portion 150, to which the other end 146b of the breather tube 146 is fluid connected, and a canister outlet portion 154 with which one end 152a of a purge tube 152 is fluid connected. The canister inlet portion 150 and the canister outlet portion 154 are provided one above the other in a vertical direction with the canister inlet portion 150 positioned above the canister outlet portion 154. The first distance D1 from a motorcycle widthwise direction center line C1 of the motorcycle body to a right end surface (one end surface) of the canister 134 is chosen to be smaller than the second distance D2 from the center line C1 to a left end surface (other end surface) of the canister 134.

The purge tube 152 has an intermediate portion provided with an open/close valve or on-off valve 156 for selectively opening or closing a purge passage within the purge tube 152. This open/close valve 156 is disposed forwardly of the canister 134 and rearwardly of the fuel tank 15. The purge tube 152 has the other end fluid connected with the throttle body 30 (shown in Fig. 7). In other words, the purge passage communicates between the air intake passage 33 and the canister space.

The open/close valve 156 is interposed between the drain outlet portion 144 and the breather outlet portion 148. Accordingly, while interference between the tubes 142 and 146, which are fluid connected respectively with the outlet portions 144 and 148, and the open/close valve 156 is avoided, a vertical direction space between the fuel tank 15 and the canister 134 can be utilized efficiently. The open/close valve 156 performs selective opening or closure on the basis of a drive command from a control device. The control device determines whether or not a suction condition for leading the vapor gas, adsorbed by the canister 134, to the combustion engine E is satisfied on the basis of a motorcycle body condition. If the suction condition is determined as satisfied, the control device supplies a drive command to open the purge passage. The control device is so structured as to close the purge passage under a natural condition with no drive command given.

The breather tube 146 forms an upstream side tube for connecting the canister 134 with the fuel tank 15 whereas the purge tube 152 forms a downstream side tube for connecting the combustion engine E with the canister 134. The breather tube 146 and the purge tube 152 are required to be flexible so that handling thereof can be easily accomplished. Also, the breather tube 146 and the purge tube 152 are specially treated so that an undesirable leakage of the vapor gas can be prevented. For this purpose, the breather tube 146 and the purge tube 152 bring about a merit in terms of cost reduction as compared with the use of standard rubber tubes when the tube length is reduced.

Also, the breather outlet portion 148 in the rear surface of the fuel tank 15 forms a tank side connection portion with which the one end 146a of the upstream side tube 146 is connected, while the canister inlet portion 150 of the canister 134 forms a canister side connection portion with which the other end 146b of the upstream side tube 146 is connected. Both of the breather outlet portion 148 and the canister inlet portion 150 are disposed on one side of the motorcycle widthwise direction, specifically on the right side in the practice of the embodiment now under discussion, relative to the motorcycle widthwise direction center line C1 of the motorcycle body.

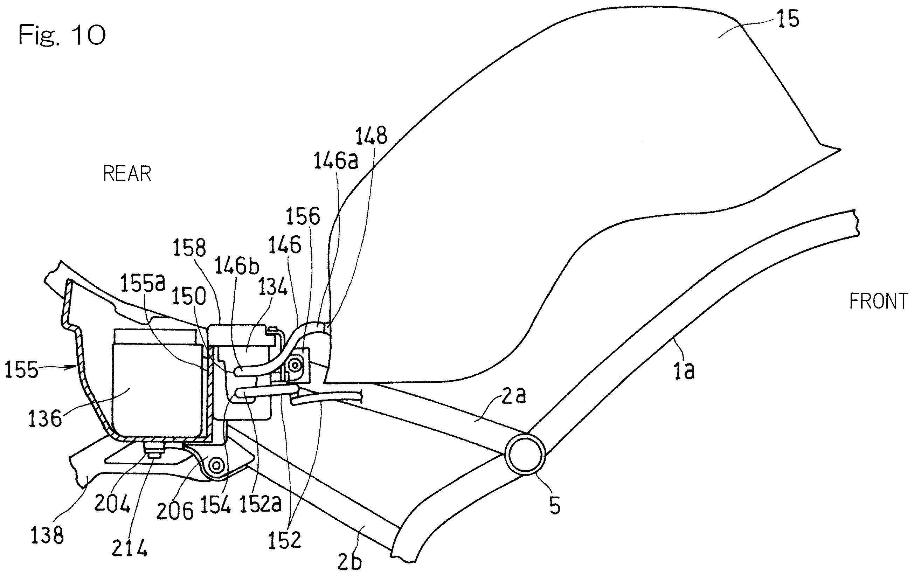

As shown in Fig. 10, the canister inlet portion 150 is positioned above a lower surface of the battery 135, that is, above a casing lower surface and above the lower surface of the fuel tank 15. Also, the lower surface of the canister 134 is positioned above the lower surface of the fuel tank 15.

The fuel vapor evaporated within the fuel tank 15 is introduced into the canister 134 through the breather tube 146 and is subsequently adsorbed by the activated carbon 135 (shown in Fig. 9). During the engine being driven, the vapor adsorbed by the activated carbon 135 is, after having been desorbed by the suction of a piston, supplied to the air intake passage 33 within the throttle body 30, shown in Fig. 7, by way of the purge tube 152 and is then combusted in the combustion engine E.

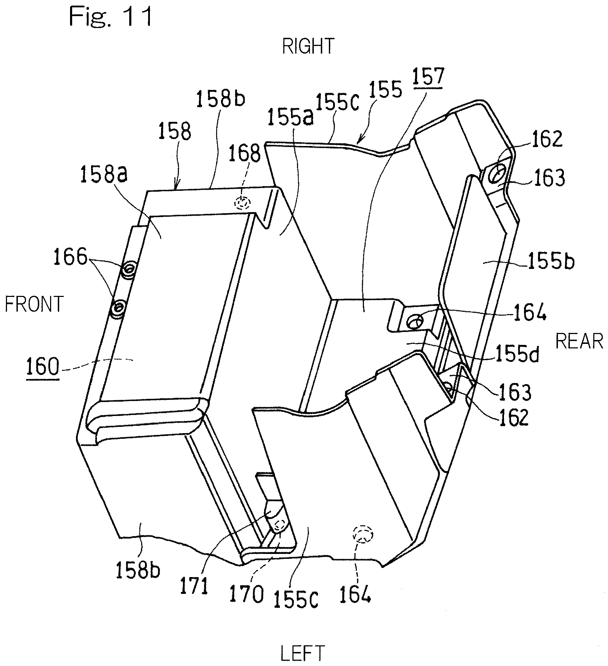

The battery 136 is accommodated within a battery casing 155, which is a sort of the accessory casing. As shown in Fig. 11, the battery casing 155 is of a structure including a front wall 155a, a rear wall 155b, left and right side walls 155c and 155c and a bottom wall 155d. By those walls 155a, 155b, 155c, 155c, 155d, an upwardly opened battery accommodating space 157 is formed. Via this opening, the accessory is removed from above. That is, an access opening opens upwardly. The front wall 155a of the battery casing 155 has an upper end positioned above an upper end of the canister 134.

The canister 134 is disposed having been offset to the left side of the motorcycle body. In the practice of the embodiment now under discussion, the canister 134 is disposed having been offset to the left side relative to the motorcycle widthwise direction center of the battery casing 155. Accordingly, a space can be easily secured between the canister inlet portion 150 and the motorcycle frame structure FR and, also the radius of curvature of the breather tube 146 can be increased. As a result, a piping work for the breather tube 146 can be eased.

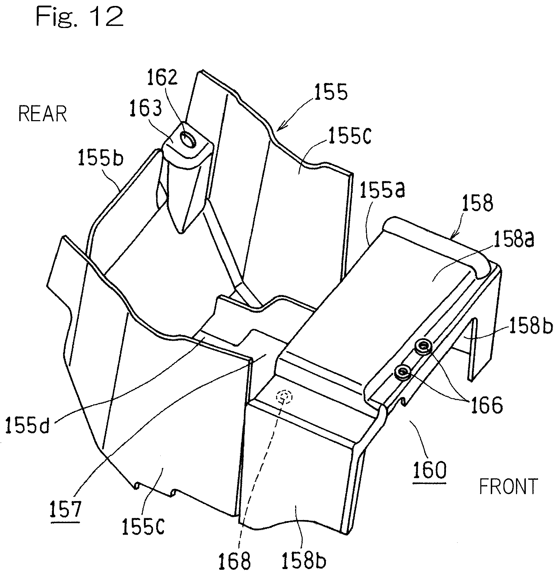

The battery casing 155 includes a support frame 158 extending forwardly from the front wall 155a. This support frame 158 in turn includes an upper wall 158a, and left and right side walls 158b and 158b. The upper wall 158a, the left and right side walls 158b and 158b cooperate with the front wall 155 of the battery casing 155 to define the canister accommodating space 160. As shown in Fig. 12, the canister accommodating space 160 opens forwardly and downwardly.

The upper wall 158a of the support frame 158 has an upper end positioned above an upper end of the canister 134 and extends forward from an upper portion of the front wall 155a. The upper wall 158a is formed in a flat plate shape extending along the plane extending in a direction traversing the longitudinal direction of the motorcycle. In the practice of the embodiment now under discussion, the upper wall 158a extends horizontally. The left and right side walls 158b extend forwardly from left and right side portions of the front wall 155a of the battery 155, respectively. The left and right side walls 158b are formed in a flat plate shape extending along the plane extending in a direction perpendicular to the motorcycle widthwise direction. The left and right side walls 158b are positioned on an outer side in the motorcycle widthwise direction relative to the canister 134. By the upper wall 158a and the left and right side walls 158b, upper and left and right surfaces of the canister 134 are covered.

The canister accommodating space 160 for accommodating therein the canister 134 and the battery accommodating space 157 are partitioned from each other by the front wall 155a of the battery casing 155 shown in Fig. 11. In other words, the front wall 155a of the battery casing 155 forms a partition wall partitioning the canister 134 and the battery 136 from each other.

The canister accommodating space 160 is defined forwardly of and adjacent to the upper opening of the battery accommodating space 157 and is enclosed or covered from above by the upper wall 158a. By the front wall 155a and the upper wall 158a, the canister 134 is so partitioned that the canister 134 will not contact the battery 136, in a condition mounted on the motorcycle body, and the battery 136 during the selective removal or mounting. In other words, the front wall 155a partitions the canister accommodating space 160 and the battery accommodating space 157 from each other in the longitudinal direction of the motorcycle and, also, the upper wall 158a partitions the canister accommodating space 160 and a space above the battery accommodating space 157 from each other.

As described above, the front wall 155a of the battery casing 155 forms the partition wall, the battery casing 155 forms the battery accommodating space 157 that opens upwardly, and the support frame 158 forms the canister accommodating space 160 that opens downwardly. Accordingly, the battery casing 155, the front wall 155a and the support frame 158 can be simultaneously formed with the use of a molding die assembly made up of upper and lower split dies.

The battery casing 155 has a rear end portion formed with a first insertion hole 162 that is oriented in the vertical direction. In the practice of the embodiment now under discussion, the first insertion hole 162 is provided one in opposite end portions in the motorcycle widthwise direction, totaling two. More specifically, a mounting surface 163 is formed in the rear wall 155b and a side wall 155c, of the battery casing 155, in a fashion continued to each other and oriented in the vertical direction, and the first insertion hole 162 is formed in this mounting surface 163.

The bottom wall 155d of the battery casing 155 is provided with a second insertion hole 164 oriented in the vertical direction. In the practice of the embodiment now under discussion, the second insertion hole 164 is provided one in opposite end portions in a rear portion of the bottom wall 155d, totaling two.

The upper wall 158a of the support frame 158 of the battery casing 155 has a front end portion that is provided with a first threaded hole 166 oriented in the vertical direction. In the embodiment now under discussion, the first threaded hole 16 is provided in two in the front end portion of the upper wall 158a, with the first threaded holes 166b being juxtaposed relative to each other in a motorcycle widthwise direction intermediate portion of the upper wall 158a. Each of those first threaded holes 166 is so formed by means of an insert molding of a metallic nut that a screw body can be threaded from above.

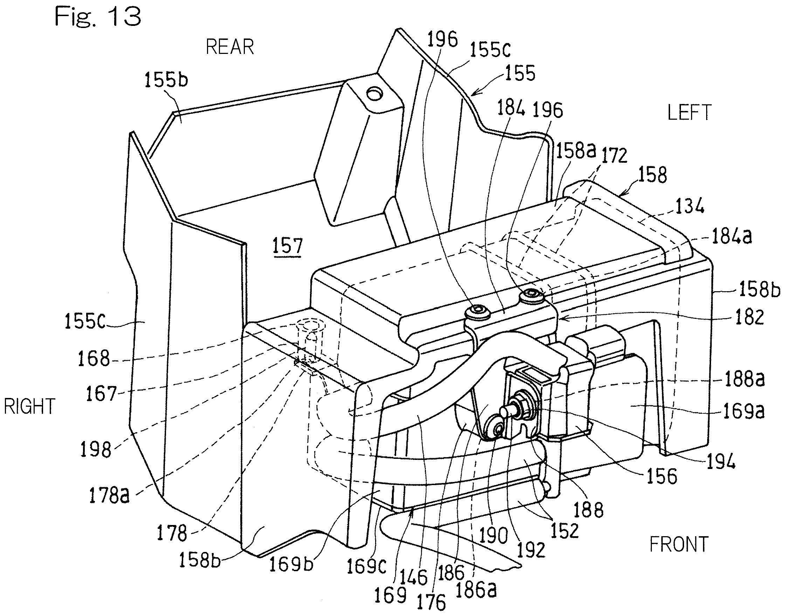

The upper wall 158a of the support frame 158 has a rear portion provided with a second threaded hole 168 that is oriented downwardly. In the embodiment now under discussion, the second threaded hole 168 is provided on a right side portion of the rear portion of the upper wall 158a in the motorcycle widthwise direction. In detail, a boss portion 167 (best shown in Fig. 13), which protrudes downwardly from a lower surface of the upper wall 158a, is integrally formed by means of a die molding, the second threaded hole 168 is so formed to the boss portion 167 that a screw body can be threaded from below.

The bottom wall 155d of the battery casing 155 has a front end portion provided with a third threaded hole 170 that is oriented downwards. In the practice of the embodiment now under discussion, the third threaded hole 170 is provided in a left side portion of the front end portion of the bottom wall 155d. More specifically, the bottom wall 155d of the battery casing 155 is integrally formed with an upwardly protruding boss portion 171 by means of a die molding, and the third threaded hole 170 is so formed to the boss portion 171 that a screw body can be threaded from below.

As shown in Fig. 13, the canister 134 is supported by the support frame 158 of the battery casing 155. More specifically, the canister 134 is retained by a holder 169, and the holder 169 is removably fitted to the support frame 158. In other words, the support frame 158 of the battery casing 155 forms a canister support portion for supporting the canister 134.

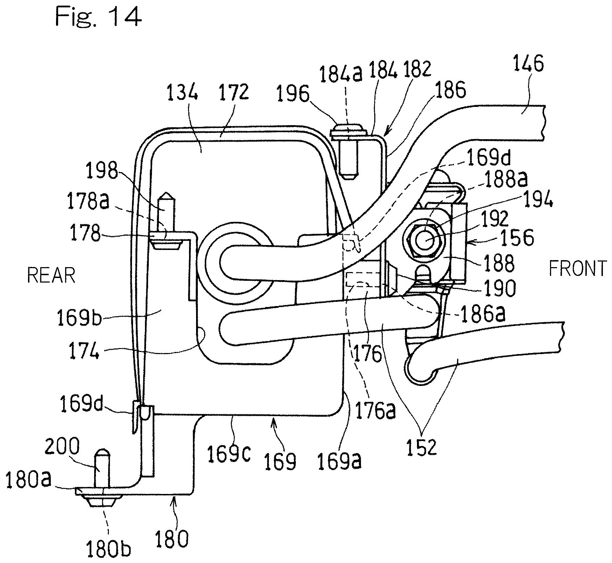

The holder 169 is of a rectangular shape having its lengthwise direction lying in the motorcycle widthwise direction as viewed from top and includes a front wall 169a, a right side wall 169b and a bottom wall 169c. The canister 134 is placed on the bottom wall 169c of the holder 169 and retained within the holder 169 by means of a rubber band 172. As shown in Fig. 14, the rubber band 172 is engaged with engagement pawls 169d provided in the front wall 169a and the bottom wall 169c of the holder 169. The right side wall 169b of the holder 169 is formed with a tube opening 174 through which the breather tube 146 and the purge tube 152 extend.

In other words, the holder 169 has a right side end surface formed with a throughhole extending in the motorcycle widthwise direction in the vicinity of an outlet and an inlet for the canister 134, and the tubes 146 and 152 are inserted into this throughhole. With respective connection points of the tubes 146 and 152 enclosed by the upper side wall and the right side wall, an undesirable access to the connection points can be prevented.

The front wall 169a of the holder 169 is provided with a cylindrical mounting portion 176 that protrudes forwardly. This mounting portion 176 has a tip end in which a fourth threaded hole 176a oriented forwardly is formed. The right side wall 169b of the holder 169 is provided with a first mounting piece 178 extending in a laterally rightward direction. This first mounting piece 178 is formed in an upper end portion of a rear end portion of the right side wall 169b. A third insertion hole 178a oriented in the vertical direction is formed in this first mounting piece 178.

The bottom wall 169c of the holder 169 is provided with a second mounting piece 180 that extends downwards. This second mounting piece 180 is formed in a left end portion (in a deep region of the plane of a paper) of the rear end portion of the bottom wall 169c. This second mounting piece 180, after having extended downwardly, extends rearwardly to form a mounting surface 180a which is oriented upwardly. This mounting surface 180a is formed with a fourth insertion hole 180d that is oriented in the vertical direction.

The holder 169 is fitted to the support frame 158 of the battery casing 155 through a mounting piece 182 shown in Fig. 13. The mounting piece 182 is formed by bending a sheet metal. More specifically, the mounting piece 182 includes a first flat surface portion 184 extending in a direction parallel to the motorcycle widthwise direction, a second flat surface portion 186 bent downwardly from the first flat surface portion 184 and extending in the vertical direction, and a third flat surface portion 188 bent forwardly from the second flat surface portion 186 and extending in a direction parallel to the longitudinal direction of the motorcycle.

The first flat surface portion 184 is formed with two fifth insertion holes 184a that are oriented in the vertical direction, which fifth insertion holes 184a are juxtaposed to each other in the motorcycle widthwise direction. The second flat surface portion 186 has a lower end portion formed with a sixth insertion hole 186a that is oriented in a direction parallel to the longitudinal direction. A seventh insertion hole 188a that is oriented in the motorcycle widthwise direction is formed in the third flat surface portion 188.

A fastening member 190 is inserted form front into the sixth insertion hole 186a in the mounting piece 182 and is then threadingly fastened to the fourth threaded hole 176a defined in the mounting piece 176 of the holder 169. A screw body 192 fixed to the open/close valve 156 is inserted from lateral left into the seventh insertion hole 188a defined in the mounting hole 182, and a nut 194 is subsequently threadingly fastened to this screw body 192. Also, a fastening member 196 is inserted from above into each of the fifth insertion holes 184a in the mounting piece 182 and is then threadingly fastened to the first threaded hole 166 in the support frame 158 for the battery casing 155. Accordingly, the front portion of the holder 169 is supported by the support frame 158 through the mounting piece 182, and also the open/close valve 156 is supported by the support frame 158 through the mounting piece 182. The open/close valve 156 is opened when the canister outlet portion 154 is purged with air. As discussed above, the support frame 158 for the battery casing 155 forms an open/close valve support portion for supporting the open/close valve 156.

A fastening member 198 is inserted from below into the third insertion hole 178a in the first mounting piece 178 of the holder 169 and is then threadingly fastened to the second threaded hole 168 in the support frame 158 on a front side of the battery casing 155. A fastening member 200 is inserted from below into the fourth insertion hole 180b in the second mounting piece 180 of the holder 169 shown in Fig. 14 and is then threadingly fastened to the third threaded hole 170 (shown in Fig. 11) of the battery casing 155. Accordingly, the rear portion of the holder 169 is supported by the battery casing 155.

As shown in Fig. 9, a fastening member 202 is inserted from above into the first insertion hole 162 defined in the rear portion of the battery casing 155 (as shown in Fig. 11) and is then threadingly fastened to a threaded hole (not shown) that is formed in the rear fender 34. Accordingly, the rear portion of the battery casing 155 is supported by the motorcycle body.

The front-rear direction intermediate portion of the battery casing 155 is supported from below by the rear frame 2 through left and right paired support pieces 204. Each of the support piece 204 is provided in a bracket support portion 206 for supporting the fellow passenger's step bracket 28 (shown in Fig. 1).

Each of the bracket support portions 206 is secured by welding to the lower surface of the reinforcement rail 2b of the rear frame 2 and is constituted by connecting an outer side member 208 on an outer side in the motorcycle widthwise direction and an inner side member 210 on an inner side in the motorcycle widthwise direction together. The outer side member 208 and the inner side member 210 are in the form of a metal plate and are welded together and are then secured to the reinforcement rail 2b by welding. Accordingly, the strength of the bracket support portion 206 increases.

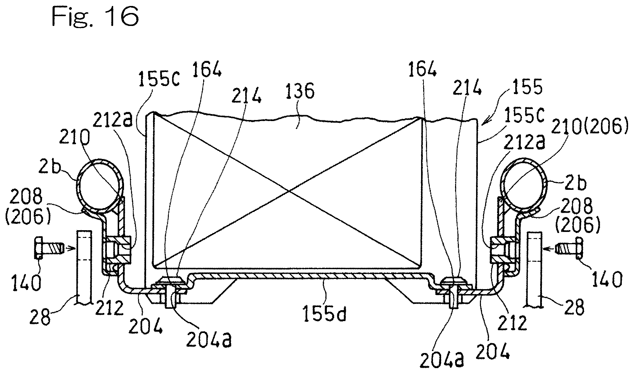

A cylindrical pipe 212 extending in the motorcycle widthwise direction through both of the outer side member 208 and the inner side member 210 is welded to the outer side member 208 and the inner side member 210. The cylindrical pipe 212 is provided two in number while juxtaposed relative to each other in the longitudinal direction of the motorcycle. A threaded hole 212a (shown in Fig. 16), to which the bolt 140 (shown in Fig. 7) is fastened, is formed in the cylindrical pipe 212 referred to above.

The inner side member 210 has a rear end portion formed with the previously described support piece 204 so as to extend inwardly in the motorcycle widthwise direction. This support piece 204 is formed by bending the inner side member 210 inwardly in the motorcycle widthwise direction. As shown in Fig. 16, a fifth threaded hole 204a oriented in the vertical direction is formed in the support piece 204. In the practice of the embodiment now under discussion, the fifth threaded hole 204a is constituted by a welded nut.

A fastening member 214 is inserted from above into the second insertion hole 164 defined in the bottom wall 155d of the battery casing 155 and is threadingly fastened to the fifth threaded hole 204a defined in the support piece 204. Accordingly, the battery casing 155 is supported from below by the rear frame 2.

In the above described construction, since the canister 134 and the battery 136, both shown in Fig. 9, are separated from each other by the front wall 155a, it is possible to avoid the interference of the battery 136 and the tools with the canister 134 during the removal or mounting of the battery 136. Also, since the canister 134 is disposed rearwardly of the fuel tank 15 and at a location adjacent the fuel tank 15 rather than to the battery 136, the breather tube 146 and the purge tube 152 can be shortened. As compared with shortening of the other standard tube, the shortening of the breather tube 146 brings about a marked cost reducing effect.

Also, since the front wall 155a of the battery casing 155 for accommodating therein the battery 136 concurrently serves as the partition wall, the number of component parts is reduced and the structure is simplified.

In addition, since the support frame 158 for the battery casing 155 concurrently serves as the canister support portion for supporting the canister 134, the number of component parts is further reduced and the structure is further simplified. Also, as compared with the case in which the canister support portion is separately formed relative to the support frame 158, it is easy to dispose the canister 134 at a location adjacent the battery casing 155 while deviation in relative position between the battery casing 155 and the canister 134 is prevented.

Moreover, since the support frame 158 for the battery casing 155 concurrently serves as the open/close valve support portion for supporting the open/close valve 156, the number of component parts is reduced and the structure become simplified. Also, as compared with the case in which the open/close valve support portion is separately formed, the open/close valve 156 can be easily positioned in the vicinity of the canister 134 while deviation in relative position between the canister 134 and the purge tube 152 is prevented.

In the practice of the foregoing embodiment of the present invention, the holder 169 supporting the canister 134 and the open/close valve 156 are fitted to the mounting piece 182 shown in Fig. 13 to form a subassembly which is in turn fitted to the battery casing 155. Thereafter, the battery casing 155 is fitted to the motorcycle body and the battery 136 is then accommodated within the battery casing 155. Accordingly, since at the stage of the subassembly, piping between the canister 134 and the open/close valve 156 is completed, there is no need to perform the piping after the subassembly has been fitted to the motorcycle. Also, fitting of the battery casing 155 to the motorcycle body allows the canister 134 and the open/close valve 156 to be disposed on the motorcycle body. Accordingly, the number of mounting steps and the number of piping steps are reduced.

The canister inlet portion 150 of the canister 134 shown in Fig. 10 is positioned above the lower surface of the battery 136 and above the lower surface of the fuel tank 15. Accordingly, since the canister inlet portion 150 is positioned at a location below the rider's seat 18 and as upwardly as possible, an undesirable increase of the vertical length of the breather tube 146 can be avoided and the breather tube 146 can be shortened.

The breather outlet portion 148 of the fuel tank 15 and the canister inlet portion 150 of the canister 134, both shown in Fig. 9, are positioned on right side in the motorcycle widthwise direction relative to the motorcycle widthwise direction center line C1 of the motorcycle body. Accordingly, a possible increase of the length of the breather tube 146 in the motorcycle widthwise direction can be avoided and the breather tube 146 can be shortened.

The canister inlet portion 150 is formed on the right end surface of the canister 134 and the first distance D1 from the motorcycle widthwise center line C1 of the motorcycle body to the right end surface of the canister 134 is chosen to be smaller than the second distance D2 from the motorcycle widthwise center line C1 to the left end surface of the canister 134. Accordingly, it is possible to avoid the undesirable increase of the length of the breather tube 146 in the motorcycle widthwise direction and the breather tube 146 can therefore be shortened.

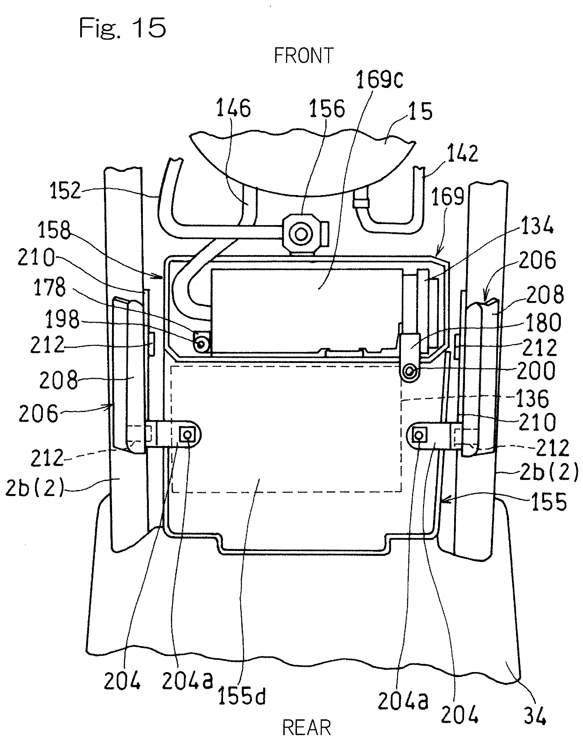

As shown in Fig. 15, the battery casing 155 is supported by the bracket support portion 206 for supporting the fellow passenger's step bracket 28 (shown in Fig. 7). Thus, the bracket support portion 206 for supporting the step bracket 28 concurrently serves a support for the battery casing 155 and, therefore, the number of component parts is reduced.

Since the canister 134 is covered by the support frame 158, even when the fuel enters into the canister 134 through the tube 146 when the motorcycle rolls over, an undesirable leak of the fuel into the battery casing 155 can be prevented.

Since the lengthwise direction of the canister 134 is oriented in the motorcycle widthwise direction, an undesirable increase of the front-rear direction dimension of the canister 134 can be suppressed. Accordingly, the canister 134 can be easily disposed in a narrow space between the battery 136 and the fuel tank 15. Since the canister inlet portion 150 and the canister outlet portion 154 overlap one above the other when viewed from top, the tubes 146 and 156, which are fluid connected with them, overlap one above the other. Accordingly, the space saving can be accomplished. The breather tube 146 for fluid connecting the fuel tank 15 and the canister 134 together and the purge tube 152 for fluid connecting the canister 134 and the open/close valve 156 are so disposed as to overlap mostly one above the other when viewed from top.

A main harness is disposed on a left side, which is the other side of the motorcycle widthwise direction, so as to extend in a direction parallel to the longitudinal direction of the motorcycle. Orienting a connector for the open/close valve 156 towards the left side makes it possible to shorten the wiring from the main harness to the open/close valve 152. The purge tube 156 for fluid connecting the canister 134 and the open/close valve 156 together and the purge tube 152 for fluid connecting the open/close valve 156 and the throttle body 30 together are disposed on the right side which is the one side of the motorcycle widthwise direction. Accordingly, the interference between the main harness and the purge tube 152 can be avoided.

In describing the foregoing embodiments, reference has been made to the "accessory casing" for accommodating the accessory that is removably fitted to the motorcycle body, but the present invention is not necessarily limited to the accessory casing and may be equally applied to any casing such as, for example, that for accommodating a rider's pair of gloves. In this case, the accommodating casing open upwardly and the canister side connecting point (the canister inlet portion 150) is positioned above the lower surface of the accommodating casing. Accordingly, since the canister inlet portion 150 is positioned below the rider's seat 18 as upwardly as possible, the undesirable increase of the length of the breather tube 146 in the vertical direction can be avoided and the breather tube 146 is therefore shortened.

The accommodating casing is provided below the rider's seat 18. The accommodating casing accommodates therein at least one of the accessories. With the rider's seat 18 removed from the motorcycle body, the accommodating casing is opened upwardly and the accessory accommodated within the accommodating casing can be removed. The canister 134 is disposed rearwardly of the fuel tank 15 and forwardly of the front wall of the accommodating casing. In other words, the canister 134 is disposed forwardly of the accessory. Also, the battery 136 and the accommodating casing may be disposed at respective separate sites.

Where the tank side connection point 148 is disposed on the left side, the canister inlet portion 150 may be disposed on the left side and the canister 134 may be offset on the left side. The present invention works satisfactory if the canister 134 is disposed below the seat 18 and in the vicinity of the fuel tank 15, and the type of the combustion engine is not specifically limited. By way of example, the combustion engine may be in the form of a single cylinder combustion engine or a V-type combustion engine. The lengthwise direction of the accessory may be made parallel to the direction of the lengthwise of the canister 134. Thus, by using such disposition, it is possible to undesirably increase the dimension corresponding to the sum of the dimension of the accessory and the dimension of the canister 134.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### Reference Numerals

6 •••• Handlebar
14 •••• Rear wheel
15 •••• Fuel tank
18 •••• Rider's seat
26 •••• Foot step for fellow passenger
28 •••• Step bracket
34 •••• Rear fender
35 •••• Battery (Accessory)
36 •••• Accommodating space
38 •••• Canister space
40 •••• Canister
52 •••• Terminal member of the battery
55 •••• Recessed portion
60 •••• Partition wall
64 •••• Introducing tube
66 •••• Deriving tube
70 •••• Covering
72 •••• Opening
134 •••• Canister
136 •••• Battery (Accessory)
146 •••• Breather tube (Upstream side tube)
148 •••• Breather outlet portion (Tank side connection portion)
150 •••• Canister inlet portion (Canister side connection portion)
152 •••• Purge tube (Downstream side tube)
155 •••• Battery casing (Accessory casing)
155a •••• Front wall (Partition wall)
156 •••• Open/close valve
158 •••• Support frame (Canister support portion, Open/close support portion)

## Claims

1. A motorcycle in which: above a rear wheel (14) and between left and right paired rear frame (2), an accommodating space (36) to accommodate an accessory (35), which is removable to a motorcycle body, and a canister space (38) to accommodate a canister (40) are disposed; and
the canister space (38) and the accommodating space (36) are partitioned from each other by a partition wall (60), **characterized in that**
a portion of a rear fender (34) disposed above the rear wheel (14) forms the partition wall (60);
a recessed portion (55) configured to be recessed upwardly is provided in an lower surface of the rear fender (34);
the accommodating space (36) is formed on an upper surface side of the rear fender (34), and the recessed portion (55) in the lower surface of the rear fender (34) forms the canister space (38); and
the rear fender (34) has a covering (70) fitted thereto, the covering being to cover the recessed portion (55).

2. The motorcycle as claimed in claim 1, wherein the partition wall (60) is so formed as to block the canister space (38) from the accommodating space (36).

3. The motorcycle as claimed in claim 1 or 2, wherein the accessory includes a battery (35), and the canister (40) is disposed in the vicinity of a connection terminal member (52) of the battery (35).

4. The motorcycle as claimed in any one of claims 1 to 3, wherein the covering (70) is formed with an opening (72),
the covering (70) has an upper surface that is inclined, and
the opening (72) is formed in the most lowest position of an upper surface of the covering.

5. The motorcycle as claimed in any one of claims 1 to 4, wherein a tube (64, 66) connected with the canister (40) is disposed on an outer side of the accommodating space (36).

## Patentansprüche

1. Motorrad, bei dem über einem Hinterrad (14) und zwischen dem linken und rechten, paarweisen Heckrahmen (2) ein von einem Motorradkörper abnehmbarer Aufnahmeraum (36) zur Aufnahme eines Zubehörteils (35) und ein Kanisterraum (38) zur Aufnahme eines Kanisters (40) angeordnet sind; und
der Kanisterraum (38) und der Aufnahmeraum (36) durch eine Trennwand (60) voneinander getrennt sind, **dadurch gekennzeichnet, dass**
ein Abschnitt eines hinteren Kotflügels (34), der über dem Hinterrad (14) angeordnet ist, die Trennwand (60) bildet;
ein ausgenommener Abschnitt (55), der ausgebildet ist, um nach oben ausgenommen zu werden, in einer unteren Fläche des hinteren Kotflügels (34) vorgesehen ist;
der Aufnahmeraum (36) auf einer oberen Flächenseite des hinteren Kotflügels (34) gebildet ist und der ausgenommene Abschnitt (55) in der unteren Fläche des hinteren Kotflügels (34) den Kanisterraum (38) bildet; und
der hintere Kotflügel (34) eine daran angepasste Abdeckung (70) aufweist, wobei die Abdeckung den ausgenommenen Abschnitt (55) bedeckt.

2. Motorrad nach Anspruch 1, wobei die Trennwand (60) derart gebildet ist, dass der Kanisterraum (38) von dem Aufnahmeraum (36) gesperrt ist.

3. Motorrad nach Anspruch 1 oder 2, wobei das Zubehörteil eine Batterie (35) aufweist und
der Kanister (40) in der Nähe eines Anschlussendelements (52) der Batterie (35) angeordnet ist.

4. Motorrad nach einem der Ansprüche 1 bis 3, wobei die Abdeckung (70) mit einer Öffnung (72) gebildet ist,
die Abdeckung (70) eine obere Fläche aufweist, die geneigt ist, und
die Öffnung (72) an der untersten Position einer oberen Fläche der Abdeckung gebildet ist.

5. Motorrad nach einem der Ansprüche 1 bis 4, wobei ein Rohr (64, 66), das mit dem Kanister (40) verbunden ist, auf einer Außenseite des Aufnahmeraums (36) angeordnet ist.

## Revendications

1. Motocyclette dans laquelle: au-dessus d'une roue arrière (14) et entre le châssis arrière apparié gauche et droit (2), sont disposés un espace de logement (36) pour loger un accessoire (35), qui est amovible par rapport au corps de motocyclette, et un espace de boîte (38) pour loger une boîte (40) ; et
l'espace de boîte (38) et l'espace de logement (36) sont séparés l'un de l'autre par une paroi de séparation (60), **caractérisée en ce que**
une partie d'un garde-boue arrière (34) disposée au-dessus de la roue arrière (14) forme la paroi de séparation (60);
une partie encastrée (55) configurée pour être encastrée vers le haut est prévue dans une surface inférieure du garde-boue arrière (34);
l'espace de logement (36) est formé sur un côté de surface supérieure du garde-boue arrière (34), et la partie encastrée (55) dans la surface inférieure du garde-boue arrière (34) forme l'espace de boîte (38); et
le garde-boue arrière (34) présente une couverture (70) montée sur celui-ci, la couverture servant à recouvrir la partie encastrée (55).

2. Motocyclette selon la revendication 1, dans laquelle la paroi de séparation (60) est formée de façon à bloquer l'espace de boîte (38) à partir de l'espace de logement (36).

3. Motocyclette selon la revendication 1 ou 2, dans laquelle l'accessoire comprend une batterie (35), et la boîte (40) est disposée à proximité d'un élément de borne de connexion (52) de la batterie (35).

4. Motocyclette selon l'une quelconque des revendications 1 à 3, dans laquelle la couverture (70) est formée avec une ouverture (72),
la couverture (70) a une surface supérieure inclinée, et
l'ouverture (72) est formée dans la position la plus basse d'une surface supérieure de la couverture.

5. Motocyclette selon l'une quelconque des revendications 1 à 4, dans laquelle un tube (64, 66) relié à la boîte (40) est disposé sur un côté extérieur de l'espace de logement (36).
